Europäisches Patentamt

European Patent Office

Office européen des brevets

(11) Numéro de publication: **0 258 072 B1**

# FASCICULE DE BREVET EUROPEEN

(45) Date de publication de fascicule du brevet: **15.04.92** (51) Int. Cl.⁵: **G01S 3/54**

(21) Numéro de dépôt: **87401046.5**

(22) Date de dépôt: **07.05.87**

(54) **Procédé et appareil de radiogoniométrie à modulation de fréquence par effet Doppler.**

(30) Priorité: **04.08.86 FR 8611279**

(43) Date de publication de la demande:
**02.03.88 Bulletin 88/09**

(45) Mention de la délivrance du brevet:
**15.04.92 Bulletin 92/16**

(84) Etats contractants désignés:
**BE DE ES GB IT**

(56) Documents cités:
**DE-A- 2 631 008**
**GB-A- 1 023 624**
**GB-A- 1 323 278**
**US-A- 4 005 427**

(73) Titulaire: **ROCKWELL-COLLINS FRANCE
(Société Anonyme)
6, avenue Didier Daurat Parc Industriel Aéroportuaire
F-31701 BLAGNAC(FR)**

(72) Inventeur: **Lanciaux, Jacques
2, Rue du Bayle
F-31490- Pibrac(FR)**

(74) Mandataire: **Bruder, Michel
10 rue de la Pépinière
F-75008 Paris(FR)**

Rank Xerox (UK) Business Services

## Description

La présente invention concerne un procédé et un appareil de radiogoniométrie à modulation de fréquence par effet Doppler.

On connaît déjà divers systèmes d'side à la navigation aérienne ou maritime qui utilisent la modulation de fréquence par effet Doppler. Parmi les systèmes connus utilisant une telle modulation on peut citer le système VOR Doppler fonctionnant en émission et le radiogoniomètre Rohde et Schwarz en réception. Ces systèmes reposent sur la commutation d'un nombre élevé de brins d'antenne (trente neuf brins d'antenne pour le système VDR Doppler et seize brins d'antenne pour le système Rohde et Schwarz) qui sont placés sur une circonférence, à égale distance les uns des autres. Ces brins d'antenne sont excités suivant une séquence tournante autrement dit les uns à la suite des autres sur le circonférence, chacun des brins étant excité pendant un laps de temps prédéterminé, ce qui correspond à la rotation d'une antenne fictive autour du centre de la circonférence. Le gisement d'une source émettant un signal haute fréquence est obtenu par la mesure du déphasage entre un signal de référence de rotation d'antenne et le signal obtenu à partir de l'antenne fictive tournante, après démodulation par un récepteur à modulation de fréquence.

La précision, d'un tel système de radiogoniométrie dépend du nombre de brins d'antenne, de la forme des signaux de commutation, de la reproductibilité des circuits associés à chaque brin d'antenne (commutation, amplification, caractéristiques dimensionnelles) et de la stabilité de phase du récepteur ou d'un déphasage fixe pouvant être compensé.

Pour remédier aux difficultés liées à la précision requise sur les dispositifs de commutation des brins d'antenne et leurs commandes, la solution la plus simple consiste à augmenter le nombre de brins d'antenne. En effet la précision requise sur la forme des signaux de commande et les dispositifs de commutation est d'autant plus faible que le nombre des brins d'antenne est plus élevé. Toutefois ceci a pour conséquence de conduire à des appareils volumineux, sans résoudre pour autant le problème du déphasage du récepteur.

On connaît déjà, ainsi qu'il est décrit dans le brevet DE-A-2 631008, un goniomètre à effet Doppler dont les antennes sont disposées en cercle, ces antennes ayant un diagramme de rayonnement directionnel (cardioïde). Dans ce goniomètre un dispositif de commutation simule la rotation continue de deux antennes fictives diamétralement opposées.

Par ailleurs le brevet GB-A-1 323 278 décrit un goniomètre comportant un dispositif de commutation qui simule la rotation de deux antennes diamétralement opposées qui sont excitées par les deux bandes latérales supérieure et inférieure d'une émission et les antennes non activées sont mises à la masse.

La présente invention vise à remédier aux inconvénients des appareils connus en procurant un appareil de conception particulièrement simple, peu volumineux et peu coûteux mais toutefois capable de fournir un niveau de performance élevée.

A cet effet ce procédé de radiogoniométrie à modulation de fréquence par effet Doppler, pour mesurer le gisement d'une source d'un signal haute fréquence, dans lequel on utilise, en réception, plusieurs brins d'antenne répartis régulièrement sur une circonférence et on rend successivement actives les diverses paires de brins d'antenne diamétralement opposés suivant une séquence tournante, au cours d'intervalles de temps successifs, de manière qu'au cours de chacun des intervalles de temps successifs deux brins d'antenne diamétralement opposés soient rendus actifs, est caractérisé en ce que, pendant chacun des intervalles de temps, l'on commute alternativement, selon un signal sous-porteuse, les deux brins d'antenne diamétralement opposés de la paire de brins d'antenne rendus alors actifs et en ce qu'on obtient un signal résultat de l'addition des signaux correspondant à la commutation alternative des deux brins d'antenne considérés, de manière à créer, pendant chacun des intervalles de temps, une antenne mobile fictive se déplacant diamétralement et alternativement entre les deux brins d'antenne opposés de la paire de brins d'antenne considérée.

L'invention a également pour objet un appareil de radiogoniométrie à modulation de fréquence par effet Doppler, pour mesurer le gisement d'une source d'un signal haute fréquence comprenant un nombre pair 2n, au moins égal à quatre, de brins d'antennes, répartis régulièrement sur une circonférence, un circuit de commutation des brins d'antenne connecté aux différents brins d'antenne, un circuit de commande de commutation à 2n sorties lequel est relié au circuit de commutation des brins d'antennes afin de rendre actives successivement, pendant des intervalles de temps successifs, les paires de brins d'antenne diamétralement opposés, un récepteur à modulation de fréquence relié au circuit de commutation des brins d'antenne et auquel est appliqué le signal modulé en fréquence par la commutation des brins d'antenne, des moyens pour produire un signal de référence de rotation d'antenne, et un module de traitement du signal reçu pour fournir, à partir du déphasage entre le signal reçu et le signal de référence de rotation d'antenne, une indication du gisement de la source du signal haute fréquence, caractérisé en ce qu'il comprend des moyens pour produire un signal sous-porteuse et pour appliquer ce signal, par l'intermédiaire du circuit de commutation des brins d'antenne, comme entrée de contrôle à un étage de commutation diamétrale des brins d'antenne auquel est connectée successivement chaque paire de brins d'antenne diamétralement opposés lorsque cette paire de brins d'antenne se trouve être rendue active par le circuit de commutation de telle façon qu'on commute alternativement lesdits deux brins d'antenne dans l'étage selon la fréquence et on crée un signal composé par l'addition des deux sorties commutées des brins d'antenne de manière à créer, pendant chacun des intervalles de temps successifs, une antenne mobile fictive se déplaçant alternativement, à la fréquence sous-porteuse, entre les deux brins d'antenne diamétralement opposés qui se trouvent alors rendus actifs.

Ainsi dans le procédé et l'appareil suivant l'invention, au lieu de commuter les brins d'antenne suivant une fréquence tournante, ces brins sont commutés diamétralement par une fréquence sous-porteuse. Il en résulte qu'on utilise un seul dispositif de commutation proportionnel et qu'on élimine ainsi le problème lié aux dispersions des caractéristiques des divers composants. Par ailleurs l'appareil est insensible à toutes dissymétries du dispositif d'amplification et de commutation proportionnel. En effet si les deux branches du circuit d'amplification et de mélange n'ont pas le même déphasage, celui est compensé automatiquement en faisant la moyenne sur un tour, puisque les entrées sont permutées à chaque demi-tour.

L'invention permet de construire une antenne de radiogoniométrie de petite dimension ce qui constitue une nécessité pour permettre un fonctionnement correct. En effet pour que la modulation d'amplitude provoquée par la commutation des brins d'antenne diamétralement opposés soit faible (inférieure à 10%), le diamètre de l'antenne ne doit pas être supérieur au dixième de la longueur d'onde.

L'appareil suivant l'invention permet d'atteindre une précision meilleure ± 1° sur un plan de masse correct. La précision obtenue est indépendante du déphasage du récepteur.

On décrira ci-après, à titre d'exemple non limitatif, une forme d'exécution de la présente invention, en référence au dessin annexé sur lequel :

La figure 1 est un schéma synoptique d'un appareil de radiogoniométrie suivant l'invention.

La figure 2 est un schéma du circuit de commande de commutation des brins d'antenne.

La figure 3 est un schéma illustrant la variation de phase du signal capté en fonction de la position de l'antenne fictive mobile.

La figure 4 est un diagramme illustrant les signaux de commande de commutation des brins d'antenne et le signal de référence de rotation d'antenne.

Les figures 5 et 6 sont des diagrammes illustrant la variation de la fréquence du signal reçu en fonction de la vitesse de l'antenne fictive mobile.

La figure 7 est un schéma synoptique du module de traitement des signaux.

La figure 8 est un diagramme illustrant diverses formes de signaux apparaissant dans le module de traitement.

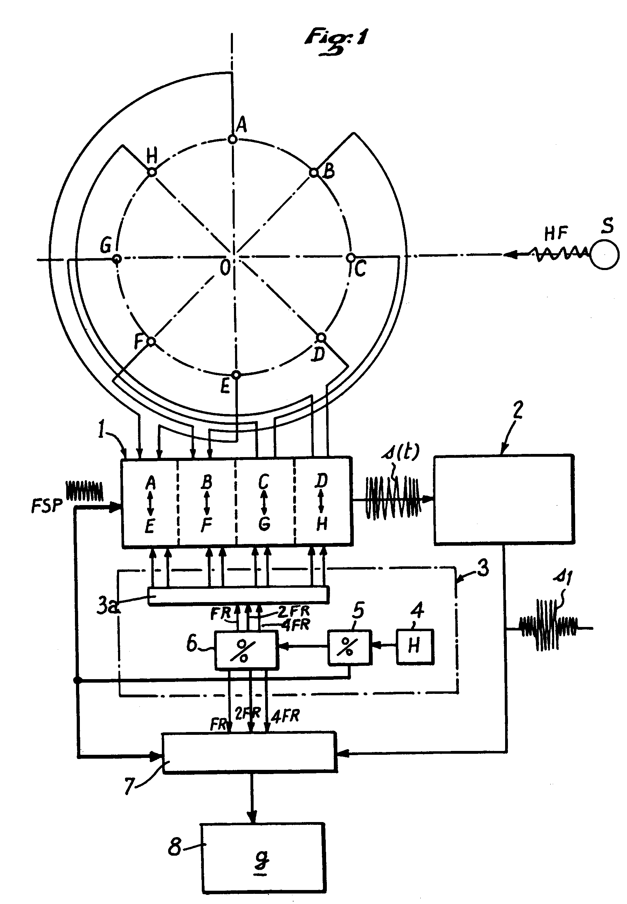

L'appareil de radiogoniométrie suivant l'invention dont le schéma d'ensemble est représenté sur la figure 1, fonctionnne en réception et il est destiné à être embarqué à bord d'un aéronef pour repérer le gisement d'une source au sol S émettant un signal haute fréquence, quelle que soit la bande utilisée. Cet appareil utilise un nombre pair 2n de brins d'antenne au moins égal à quatre, ces brins d'antenne étant répartis régulièrement sur une circonférence. Dans la forme d'exécution non limitative représentée sur le dessin, l'appareil utilise huit brins d'antenne diamétralement opposés deux à deux et régulièrement répartis sur le circonférence, à savoir les brins d'antenne, A,B,C,D,E,F,G et H. Ces huit brins d'antenne sont respectivement reliés à un circuit 1 de commutation des brins d'antenne qui est lui-même piloté par un module de commande 3. Ce module de commande comporte, entre autres circuits, un circuit de commande de commutation 3a qui est connecté au circuit de commutation des brins d'antenne 1. Le module de commande 3 comporte également une horloge 4 qui fournit un signal périodique appliqué à un étage diviseur 5 dont une sortie produit une sous-porteuse de fréquence FSP, laquelle est appliquée au circuit 1 de commutation des brins d'antenne.

Le module de commande 3 comporte également un étage générateur de signaux 6 qui est relié à la sortie du diviseur 5. Cet étage 6 produit des signaux binaires de poids 1,2,4 (FR,2FR,4FR) qui sont appliqués au circuit de commande de commutation 3a pour provoquer la séquence d'excitation des brins d'antenne comme on le verra par la suite. Le signal FR est le signal de fréquence de rotation d'antenne. Ces signaux FR,2FR,4FR sont également appliqués à un module de traitement 7 qui reçoit aussi la sous-porteuse FSP et dont la sortie est reliée à un indicateur de gisement 8.

Le circuit 1 de commutation des brins d'antenne délivre à sa sortie un signal modulé en fréquence qui est appliqué à un récepteur à modulation de fréquence ou de phase 2. Ce récepteur produit à sa sortie un signal basse fréquence modulé en amplitude qui est appliqué au module de traitement 7, pour permettre de calculer le gisement de la source 5 émettant le signal haute fréquence.

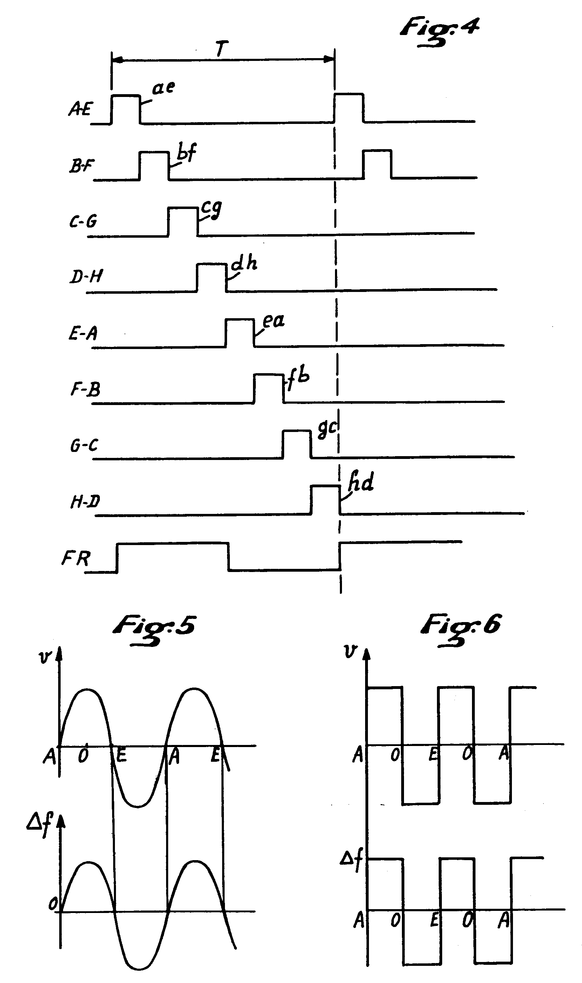

Dans le procédé suivant l'invention, les brins d'antenne A-H ne sont pas commutés les uns à la suite des autres suivant une séquence tournante, de la manière conventionnelle, mais au contraire ils sont excités par paires de brins d'antenne opposés diamétralement. Autrement dit dans un premier intervalle de temps défini par un signal créneau ae (figure 4), la première paire de brins d'antenne diamétralement opposés A-E est excitée, puis pendant un signal créneau suivant bf la deuxièmme paire BF est excitée et ainsi de suite avec un signal créneau cg pour la paire C-G et un signal créneau dh pour la paire D-H. Après un demitour les deux brins d'antenne de la première paire A-E sont à nouveau excités mais avec un déphasage de 180o de la sous-porteuse FSP, sous la commande du signal créneau ea comme on peut le voir, sur le diagramme de le figure 4. Le signal créneau as est suivi des signaux similairs fb, gc et hd pour les paires de brins d'antenne F-B, G-C et H-B. On voit également sur ce diagramme le signal FR qui est un signal logique dont la période T corresponds à un tour complet ou à la commutation complète des brins d'antenne, c'est-à-dire aux huit signaux créneaux successifs ae, bf,cg,dh,ea,fb,gc et hd.

La figure 3 illustre bien la principe de base mis en oeuvre dans le procédé et l'appareil suivant l'invention. On suppose dans ce cas que le paire de brins d'antenne A-E est excitée et que la source 5 émettant le signal haute fréquence est alignée avec la direction AE. L'excitation alternative des brins d'antenne A-E se traduit par la création d'une antenne fictive X mobile alternativement sur le diamètre AE. Le diagramme vectoriel de la figure 3 montre la variation de la phase $\phi$ du signal reçu en fonction de la position de l'antenne fictive X. Cette phase varie d'une valeur $-\phi$ max lorsque l'antenne fictive X se trouve à l'endroit du brin d'antenne E et une valeur $+\phi$ max lorsque l'antenne fictive mobile X se trouve à l'endroit du brin d'antenne A, en passant par une valeur nulle lorsque l'antenne fictive X se trouve au centre 0.

Le diagramme de la figure 5 illustre la variation de la vitesse v de déplacement de l'antenne fictive X, qui est nulle à l'endroit des brins d'antenne A et E et maximale à l'endroit du centre 0, et celle de l'excursion de fréquence $\Delta f$ du signal reçu. Ces variations, engendrées par la fréquence sous-porteuse, peuvent être sinusoïdales comme il est représenté sur la figure 5, ou bien encore présenter la forme de signaux carrés périodiques comme il est représenté sur la figure 6, ou bien encore tout autre forme, notamment triangulaire, compatible avec les possibilités de démodulation du récepteur. Dans tous les cas le signal de l'excursion de fréquence $\Delta f$ est en phase avec le signal de la vitesse v.

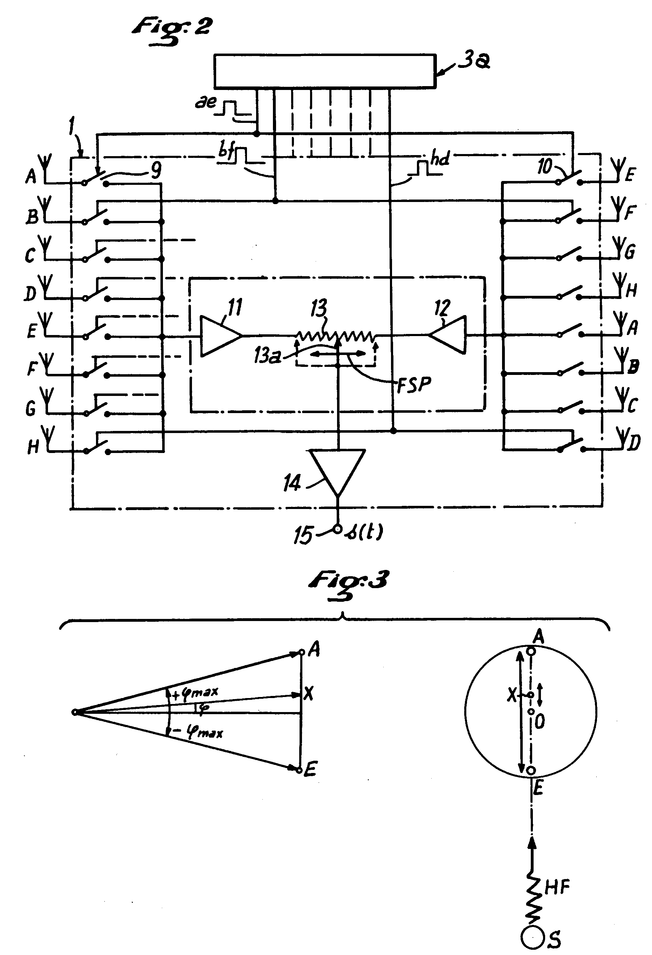

La commutation des paires de brins d'antenne s'effectue de la manière illustrée sur la figure 2. Le circuit 3a de commande de commutation émet respectivement, sur huit sorties, les huit signaux de commande de commutation d'antenne ae,bf...hd. Ces signaux de commutation d'antenne sont appliqués, à l'intérieur du circuit 1 de commutation des brins d'antenne, à des paires d'interrupteurs 9,10, normalement ouverts, de tout type connu, par exemple des diodes P-I-N, et qui sont respectivement connectés aux deux brins d'antenne opposés d'une même paire. Par example tous les interrupteurs gauches 9 sur la figure 2 sont connectés respectivement aux brins d'antenne dans l'ordre A,B...H tandis que tous les interrupteurs 10 situés à droite sur la figure 2 sont connectés respectivement aux brins d'antenne dans l'ordre E,F,G,H,A,B,C,D. Ainsi le premier signal créneau ae commande la fermeture des deux interrupteurs 9,10 connectés respectivement aux deux brins d'antenne A et E, et ainsi de suite pour les signaux créneaux suivants bf...hd. Tous les interrupteurs gauches 9 sont reliés en commun à une entrée d'un amplificateur 11 tandis que tous les interrupteurs droits 10 sont reliés en commun à une entrée d'un amplificateur 12, ces deux amplificateurs 11,12 faisant partie d'un étage 10 de commutation diamétrale des brins d'antenne par le signal à fréquence sous-porteuse FSP. Dans un but illustratif les sorties des deux amplificateurs 11 et 12 sont représentées comme étant reliées aux deux extrémités d'un potentiomètre 13 dont le curseur 13a est déplacé alternativement entre las deux extrémités de ce potentiomètre 13, à la fréquence de la sous-porteuse FSP. Il va toutefois de soi qu'en pratique le commutation par la sous-porteuse FSP peut être réalisée par n'importe quel circuit électronique connu en soi (par exemple diodes P-I-N). Le curseur 13a est relié à un amplificateur 14 dont la sortie est connectée à une borne 15 où apparaît le signal s(t) à fréquence modulée et qui est une combinaison des deux signaux reçus respectivement par les deux brins d'antenne excités se trouvant à un instant donné, par example les brins A et E. Si k est un coefficient définissant la position instantanée du curseur 13e, on a $s(t) = ks_{A(t)} + (1-k)s_{E(t)}$, $s_{A(t)}$ et $s_{E(t)}$ étant les deux signaux respectivment reçus par les deux brins d'antenne A et E en fonction du temps t.

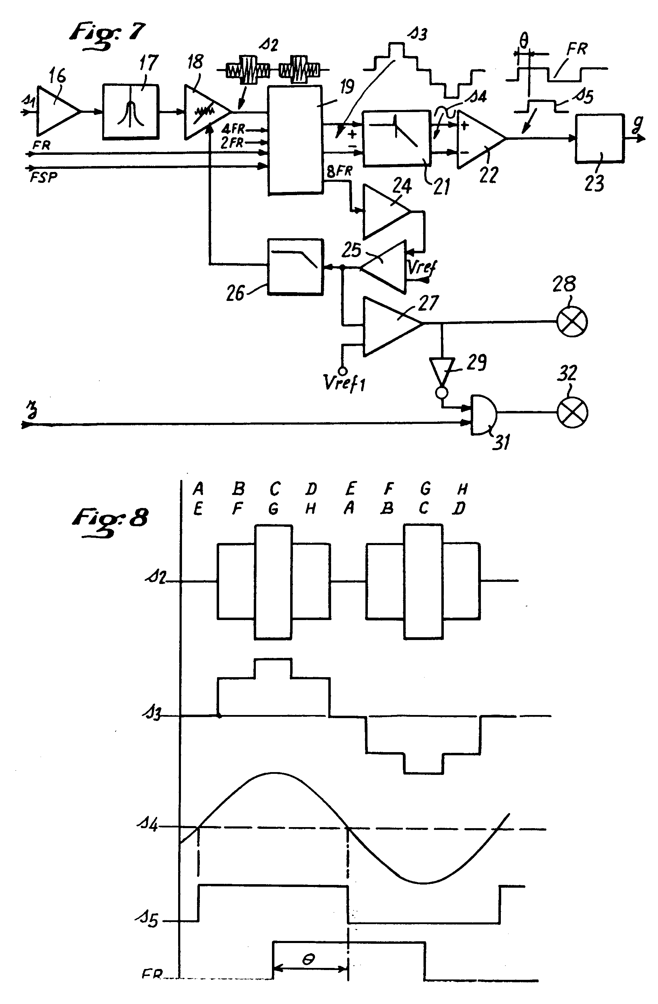

Le signal à fréquence modulée s(t) est appliqué au récepteur à modulation de fréquence 2 qui délivre à sa sortie un signal basse fréquence s1 modulé en amplitude. Ce signal est appliqué au module de traitement 7 qui comprend (figure 7) un amplificateur 16 auquel est appliqué la signal s1, puis un filtre passe-bande 17 puis un amplificateur à gain variable 18 lequel délivre à sa sortie un signal à modulation d'amplitude s2 (figure 8). Le signal s2 est représenté comme correspondant à une source de signal haute fréquence alignée avec les brins d'antenne C-G, c'est-à-dire se trouvant dans le direction GC, le brin d'antenne C étant le plus proche de la source S. De ce fait, lorsque la première paire de brins d'antenne A-E est excitée, il n'y a pas de modulation de fréquence du signal reçu du fait que la direction AE est perpendiculaire à la direction GC sur laquelle se trouve la source S. L'amplitude du signal sur chaque palier au cours de la rotation est proportionnelle à la valeur absolue du cosinus de l'angle entre la direction de l'émetteur du signal haute fréquence et la direction des brins d'antenne sélectionnés. Le signal est donc maximal si l'angle formé est nul et au contraire ce signal est nul si les brins d'antenne sélectionnés sont sur la direction perpendiculaire à la direction de l'émetteur. Le déphasage de la sous-porteuse est nul si l'émetteur est dans le secteur avant et de 180o si l'émetteur est dans la secteur arrière.

Le signal s2 est appliqueé à un filtre synchrone 19, conjointement avec le signal de fréquence sous-porteuse FSP et les signaux FR, 2FR et 4FR. Le filtre synchrone 19 délivre à sa sortie un signal s3 en escalier représentant les paliers d'amplitude du signal reçu pour les diverses paires de brins d'antenne, ce signal étant appliqué à un filtre passe-bas 21 qui délivre à sa sortie un signal s4 sinusoïdal comme on peut le voir sur la figure 8. Ce signal sinusoïdal s4 est appliqué à un comparateur 22 qui produit à sa sortie un signal de mesure s5 constitué par un créneau qui est déphasé d'un angle $\theta$ par rapport au signal de référence de rotation FR. Ce signal de mesure s5 est appliqué à un étage 23 qui calcule, à partir du déphasage $\theta$, la valeur du gisement g par rapport à la direction de référence AE (dans le cas présent g = 90o).

Le module de traitement comprend également une boucle de commande du gain de l'amplificateur 18. Cette boucle comporte un amplificateur 24 recevant à son entrée un signal 8 FR provenant du filtre synchrone 19, et dont le sortie est connectée à une entrée d'un comparateur 25 recevant, à une seconde entrée, une tension de référence V ref correspondant au niveau de tension de sortie désirée pour l'amplificateur 18. La sortie du comparateur 25 est reliée d'une part à une entrée de commande de l'amplificateur 18 à gain variable à travers un filtre passe-bas 26, et d'autre part à une entrée d'un détecteur 27 du niveau du signal de commande, lequel reçoit également à une seconde entrée une tension de référence Vrefl. La sortie du détecteur de niveau 27 est reliée directement à une lampe-témoin 28 de validité du gisement et, par l'intermédiaire d'un inverseur 29, à une entrée d'une porte ET à deux entrées 31. L'autre entrée de cette porte ET reçoit un signal z indiquant la réception du signal haute fréquence par le récepteur. La sortie de cette porte ET est connectée à une lampe-témoin 32 constituant un indicateur de verticale.

Par conséquent, lorsque l'aéronef portant l'appareil suivant l'invention passe à la verticale de la sourceS du signal HF, cette indication du passage à la verticale est fournie par l'allumage de la lampe-témoin 32.En effet l'étage 27 du détecteur de niveau émet un signal de sortie zéro, si bien que la lampe 28 de validité de gisement est éteinte. Par contre ce signal est appliqué, après inversion par l'inverseur 29, à la première entrée de la porte ET 31 qui reçoit sort autre entrée le signal z indiquant la présence du signal HF émis par la source S. La porte 31 est alors débloquée et elle provoque l'allumage de la lampe-témoin 32 indiquant le passage de l'aéronef à la verticale de le source S.

La lampe-témoin 28 de validité du gisement s'allume tant que l'aéronef se trouve dans la zone de réception du signal HF et elle s'éteint dès que l'aéronef sort de cette zone, ce qui est signalé par le disparition du signal audio s1.

## Revendications

1. Procédé de radiogoniométrie à modulation de fréquence par effet Doppler, pour mesurer le gisement d'une source d'un signal haute fréquence, dans lequel on utilise, en réception, plusieurs brins d'antenne (A-H) répartis régulièrement sur une circonférence et on rend successivement actives les diverses paires de brins d'antenne diamétralement opposés (A-E,B-F,C-G,D-H) suivant une séquence tournante, au cours d'intervalles de temps successifs, de manière qu'au cours de chacun des intervalles de temps successifs deux brins d'antenne diamétralement opposés soient rendus actifs, caractérisé en ce que, pendant chacun des intervalles de temps, l'on commute alternativement, selon un signal sous-porteuse (FSP), les deux brins d'antenne diamétralement opposés de la paire de brins d'antenne (A-E,B-F,C-G,D-H) rendus alors actifs et en ce qu'on obtient un signal résultat de l'addition des signaux correspondant à la commutation alternative des deux brins d'antenne considérés, de manière à créer, pendant chacun des intervalles de temps, une antenne mobile fictive (X) se déplacant diamétralement et alternativement entre les deux brins d'antenne opposés de la paire de brins d'antenne considérée.

2. Appareil de radiogoniométrie à modulation de fréquence par effet Doppler, pour mesurer le gisement d'une source d'un signal haute fréquence comprenant un nombre pair 2n, au moins égal à quatre, de brins d'antennes (A-

5

H), répartis régulièrement sur une circonférence, un circuit (1) de commutation des brins d'antenne connecté aux différents brins d'antenne (A-H), un circuit de commande de commutation (3a) à 2n sorties lequel est relié au circuit (1) de commutation des brins d'antennes afin de rendre actives successivement, pendant des intervalles de temps successifs, les paires de brins d'antenne diamétralement opposés (A-E,B-F,C-G,D-H), un récepteur à modulation de fréquence (2) relié au circuit (1) de commutation des brins d'antenne et auquel est appliqué le signal (s(t)) modulé en fréquence par la commutation des brins d'antenne, des moyens (6) pour produire un signal de référence de rotation d'antenne (FR), et un module (7) de traitement du signal reçu (s1) pour fournir, à partir du déphasage entre le signal reçu (s1) et le signal de référence de rotation d'antenne (FR), une indication du gisement de la source (S) du signal haute fréquence, caractérisé en ce qu'il comprend des moyens (4,5) pour produire un signal sous-porteuse (FSP) et pour appliquer ce signal, par l'intermédiaire du circuit (1) de commutation des brins d'antenne, comme entrée de contrôle à un étage (10) de commutation diamétrale des brins d'antenne auquel est connectée successivement chaque paire de brins d'antenne diamétralement opposés (A-E,B-F,C-G,D-H) lorsque cette paire de brins d'antenne se trouve être rendue active par le circuit de commutation (1) de telle façon qu'on commute alternativement lesdits deux brins d'antenne dans l'étage (10) selon la fréquence (FSP) et on crée un signal composé par l'addition des deux sorties commutées des brins d'antenne de manière à créer, pendant chacun des intervalles de temps successifs, une antenne mobile fictive (X) se déplaçant alternativement, à la fréquence sous-porteuse (FSP), entre les deux brins d'antenne diamétralement opposés qui se trouvent alors rendus actifs.

3. Appareil suivant la revendication 2 caractérisé en ce que le circuit de commutation des brins d'antenne (1) comprend 2n paires d'interrupteurs (9,10) commandées respectivement par les 2n sorties du circuit de commande de commutation (3) sur lesquelles apparaissent successivement et respectivement, à chaque tour, des signaux de commande (ac,bf...hd), chaque paire d'interrupteurs étant connectée, d'une part, à une paire de brins d'antenne associée (A-E,B-F,...H-D) et d'autre part à un étage de commutation des brins d'antenne de chaque paire par le signal sous-porteuse (FSP).

**Claims**

1. Radiodirection finding method using Dopper effect frequency modulation, for measuring the bearing of a source of a high-frequency signal, in which a plurality of antenna strands (A-H) distributed regularly over a circumference are used in reception, and the various pairs of diametrically opposite antenna strands (A-E, B-F, C-G, D-H) are rendered successively active in a rotating sequence, in the course of successive intervals of time, so that, in the course of each of the successive intervals of time, two diametrically opposite antenna strands are rendered active, characterized in that, during each of the intervals of time, the two diametrically opposite antenna strands of the pair of antenna strands (A-E, B-F, C-G, D-H) then rendered active are alternately switched, depending on a low frequency subcarrier signal (FSP), and in that a signal is obtained, result of the addition of the signals corresponding to the alternate switching of the two antenna strands in question, so as to create, during each of the intervals of time, a fictitious mobile antenna (X) moving diametrically and alternately between the two opposite antenna strands of the pair of antenna strands in question.

2. Radiodirection finding apparatus using Doppler effect frequency modulation, for measuring the bearing of a source of a high frequency signal, comprising an even number 2n, at least equal to four, of antenna strands (A-H), distributed regularly over a circumference, a circuit (1) for switching the antenna strands connected to the different antenna strands (A-H), a switching control circuit (3a) with 2n outputs which is connected to the antenna strands switching circuit (1) in order to render successively active, during successive intervals of time, the pairs of diametrically opposite antenna strands (A-E, B-F, C-G, D-H), a frequency modulation receiver (2) connected to the antenna strands switching circuit (1) and to which is applied the signal (s(t)) modulated in frequency by the switching of the antenna strands, means (6) for producing an antenna rotation reference signal (FR), and a module (7) for processing the signal received (s1) in order to furnish, from the phase-shift between the signal received (s1) and the antenna rotation reference signal (FR), an indication of the bearing of the source (S) of the high frequency signal, characterized in that it comprises means (4, 5) for producing a low-frequency subcarrier signal (FSP) and for applying this signal, via the antenna strands switching circuit (1), as control input to a stage (10) for diametral switching of the antenna strands to which is successively connected each pair of diametrically opposite antenna strands (A-E, B-F, C-G, D-H) when this pair of antenna strands is rendered active by the switching circuit (1) so that said two antenna strands are alternately switched in stage (10) depending on the frequency (FSP) and a signal is created, composed by the addition of the two switched outputs of the antenna strands so as to create, during each of the successive intervals of time, a mobile fictitious antenna (X), moving alternately at subcarrier frequency (FSP), between the two diametrically opposite antenna strands which are then rendered active.

3. Apparatus according to Claim 2, characterized in that the antenna strand switching circuit (1) comprises 2n pairs of switches (9, 10) respectively controlled by the 2n outputs of the switching control circuit (3) on which control signals (ac, bf...hd) successively and respectively appear at each turn, each pair of switches being connected, on the one hand, to an associated pair of antenna strands (A-E, B-F,...H-D) and, on the other hand, to a stage for switching of the antenna strands of each pair by the low-frequency subcarrier signal (FSP).

**Patentansprüche**

1. Funkpeilverfahren mit Dopplerfrequenzmodulation zum Bestimmen der Richtung einer Hochfrequenzsignalquelle, bei welchem man beim Empfang mehrere Antennenelemente (A-H), die regelmäßig auf einem Kreis verteilt sind, verwendet und die verschiedenen Paare einander diametral gegenüberliegender Antennenelemente (A-E, B-F, C-G, D-H) nacheinander während aufeinanderfolgender Zeitintervalle in zyklischer Sequenz aktiviert werden, so daß während jedes der aufeinanderfolgenden Zeitintervalle zwei diametral gegenüberliegende Antennenelemente aktiv gemacht werden, **dadurch gekennzeichnet**, daß man im Verlaufe der Zeitintervalle die beiden einander diametral gegenüberliegenden Antennenelemente der Paare von Antennenelementen (A-E, B-F, C-G, D-H), die so aktiv gemacht werden, gemäß einem niederfrequenten Hilfsträgersignal (FSP) wechselweise kommutiert, wobei man ein Signal, das aus der Addition der entsprechenden Signale bei der wechselweisen Kommutation der jeweiligen zwei Antennenelemente derart erhält, daß während jedes Zeitintervalles eine virtuelle bewegliche Antenne (X) erzeugt wird, die sich diametral und alternierend zwischen den beiden gegenüberliegenden Antennenelementen des betrachteten Paares von Antennenelementen bewegt.

2. Dopplerfrequenzmodulation-Funkpeileinrichtung zum Messen der Richtung einer Hochfrequenzsignalquelle mit einer mindestens vier betragenden geradzahligen Anzahl 2n von Antennenelementen (A-H), die regelmäßig auf einem Kreis verteilt sind, einer Schaltung (1) zum Umschalten der Antennenelemente, die mit den verschiedenen Antennenelementen (A-H) verbunden ist, einer Umschalt-Steuerschaltung (3a) mit 2n Ausgängen, die mit der Schaltung (1) zum Umschalten der Antennenelemente verbunden ist, um während aufeinanderfolgender Zeitintervalle Paare von einander diametral gegenüberliegenden Antennenelementen (A-E, B-F, C-G, D-H) nacheinander anzuschalten, einem Frequenzmodulationsempfänger (2), der mit der Schaltung (1) zum Umschalten der Antennenelemente verbunden und dem das Signal (s(t)) zugeführt ist, welches durch die Umschaltung der Antennenelemente frequenzmoduliert ist, einer Anordnung (6) zum Erzeugen eines Antennenrotations-Referenzsignals (FR) und einem Modul (7) zur Verarbeitung des empfangenen Signals (s1), um auf der Basis des Phasenunterschiedes zwischen dem empfangenen Signal (s1) und dem Antennenrotations-Referenzsignal (FR) eine Anzeige der Richtung der Hochfrequenzsignalquelle (S) zu erzeugen, **dadurch gekennzeichnet**, daß sie eine Anordnung (4, 5) zum Erzeugen eines niederfrequenten Hilfsträgersignales (FSP) und zum Anlegen dieses Signales über die Schaltung (1) zum Umschalten der Antennenelemente als Steuereingangssignal an eine Stufe (10) zum diametralen Umschalten der Antennenelemente, mit denen die Paare der einander diametral gegenüberliegenden Antennenelemente (A-E, B-F, C-G, D-H) sukzessive verbunden werden, wenn das betreffende Paar von Antennenelementen (A-E, B-F, C-G, D-H), durch die Umschalt-Schaltung (1) aktiv gemacht ist, so daß man die Antennenelemente in der Stufe (10) entsprechend der Frequenz (FSP) wechselweise umschaltet und ein durch die Addition der beiden umgeschalteten Ausgänge der Antennenelemente zusammengesetztes Signal erzeugt und damit im Zuge jedes der sukzessiven Zeitintervalle eine virtuelle bewegliche Antenne (X) erzeugt, die sich alternierend mit der Hilfsträgerfrequenz (FSP) zwischen den beiden, einander diametral gegenüberliegenden Antennenelementen bewegt, die gerade aktiv gemacht sind.

3. Einrichtung nach Anspruch 2, **dadurch gekennzeichnet**, daß die Schaltung (1) zur Umschaltung der Antennenelemente 2n Paare von Schaltern (9, 10) enthält, die jeweils durch die 2n Ausgänge der Umschalt-Steuerschaltung (3) gesteuert werden, an denen nacheinaner jeweils während jedes Umlaufes Steuersignale (ac,bf...hd) auftreten, und daß jedes Paar von Schaltern einerseits mit einem Paar von entsprechenden Antennenelementen (A-E, B-F,...H-D) und andererseits an eine Stufe zum Umschalten der Antennenelemente jedes Paares durch das niederfrequente Hilfsträgersignal (FSP) verbunden ist.

Fig:1

*Fig. 2*

*Fig. 3*

Fig. 4

Fig. 5

Fig. 6

Fig. 7

Fig. 8